(19) Europäisches Patentamt
European Patent Office
Office européen des brevets

(11) **EP 4 647 972 A1**

(12) **EUROPEAN PATENT APPLICATION**

(43) Date of publication:
**12.11.2025 Bulletin 2025/46**

(21) Application number: **25175160.8**

(22) Date of filing: **08.05.2025**

(51) International Patent Classification (IPC):
*G06N 3/094* (2023.01)    *G06N 20/00* (2019.01)

(52) Cooperative Patent Classification (CPC):
**G06N 3/094; G06N 20/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **09.05.2024 PT 2024119461**

(71) Applicant: **Scoretarget Unipessoal, Lda**
**1900 - 221 Lisboa (PT)**

(72) Inventors:
• **Leite Veloso Costa de Passos, Ricardo Manuel**
**1800-075 Lisboa (PT)**
• **Rocha Vieira Gonçalves, Pedro**
**1000-180 Lisboa (PT)**

(74) Representative: **Moniz Pereira, Manuel**
**Gastão da Cunha Ferreira, Lda.**
**Rua dos Bacalhoeiros 4**
**1100-070 Lisboa (PT)**

(54) **METHOD AND SYSTEM FOR DETECTING SMALL-DISTANCE ADVERSARIAL EXAMPLES**

(57) The present invention relates to the field of machine learning, more specifically to a method and a system implemented in a computer for determining the robustness of a machine learning (ML) model. The system takes an input, computes other inputs that are within a fixed distance away from the original input, and checks which computed inputs are adversarial examples. Based on the adversarial examples identified, the method and system will determine whether the ML model is considered robust.

Figure 1

EP 4 647 972 A1

**Description**

**Scope of the invention**

The present invention relates to the field of machine learning, more specifically to a method and a system implemented in a computer for determining the robustness of a machine learning (ML) model. The system takes an input, computes other inputs that are within a fixed distance away from the original input, and checks which computed inputs are adversarial examples. Based on the adversarial examples identified, the method and system will determine whether the ML model is considered robust.

The system works in two phases, the first to produce the computed inputs from the real input, and the second phase checks if the result of each of those computed inputs differs from the original result.

An input is a set of features, usually named "vector input".

The computation time is directly proportional to the number of the features, the domain of each feature and the distance.

**Framework of the invention**

The scope of the method and system of the present invention are machine learning (ML) classifiers. The purpose of a ML classifier is to predict a class from a set of numerical features, also called an input vector. Each feature *f* of the input vector takes a value from a domain *Df* that is discrete. Examples of discrete domains are the domain of natural numbers *N* and the domain of integers *Z.* The domain of the set of features, called the feature space *F,* will therefore be the product of the domains of all features, i.e. $F = D_1 \times D_2 \times ... \times D_f$.

A ML classifier works by taking an input vector *v* in the feature space *F* and predicting a class *c,* also called a label, from that point. The class is defined in a set of classes *K.*

The present invention derives adversarial examples from pairs (*v,c*). Adversarial examples are inputs that are similar to other inputs, but whose classification results are not the same. Inputs that can be considered adversarial examples can be generated from original vectors *v* by applying a variation to its features. This variation cannot exceed a maximum threshold value, which usually is small enough to have the changes in the derived inputs be considered imperceptible to a human observer. Since the derived vectors are variations of *v,* it would be expected that the result of the classification algorithm would be the same as the label predicted for the original input. However, the classified label can be different, in which case the derived vector is considered an adversarial example.

At the outset of recent ML advances, researchers discovered that ML classifiers are brittle, i.e. there can exist vectors in the feature space *F* for which a small change in the input causes an observable, and problematic, change of the predicted class. Brittleness is almost universally viewed as a fundamental problem of ML models, since small changes in features are extremely likely to occur in the real-world, e.g. an image of a traffic sign can be classified differently depending on the weather, such as fog, rain, snow, or dirt. An ML model that is not brittle is declared robust.

Adversarial robustness is the problem of deciding, given some set of test inputs, whether a classification model is robust, or not, finding adversarial examples within a small fixed distance.

The importance of evaluating the robustness of ML models is illustrated by the recent editions of the competition on the verification of neural networks (VNN-COMP) [1]. Most of these tools calculate the existence of adversarial examples by assuming features obtained from real-world examples, which are known to have a continuous feature space, instead of a discrete one. Regardless, approaches evaluated in these competitions did not identify adversarial examples in a duration proportional to the size of the inputs of the ML classifier and of their feature space. The proposed method and system, by making small changes to the inputs, aims to create a novel method to evaluate the existence of adversarial examples in a discrete feature space whose total duration is proportional to the size of the inputs and their domains and to the distance.

Robustness and Adversarial Examples Definition

Given a classifier with a classification function $\kappa$ and an input vector-classification pair **(v,c),** the classifier is considered locally robust (or just robust) for *v* if all points in the feature space *F* within a small distance from *v* have the same classification as *v.* Formally:

$$\forall(x \in F).[\| x - v \|_p \le \epsilon] \to (\kappa(x) = \kappa(v))$$

Where $\varepsilon$ is the small distance, *x* are all possible points in feature space *F,* and *p* is the p-norm of the feature space.

If the classifier is not robust, then any point *x* close to *v* whose classification is different from *c* is considered an adversarial example (*AEx*). Formally:

$$x \text{ is an adversarial example} \rightarrow [\| x - v \|_p \leq \epsilon \wedge (\kappa(x) \mathbin{/}= \kappa(v))]$$

It can be readily observed from the above expressions that the condition for identifying adversarial examples is opposed to the condition of robustness.

The distance between *x* and *v* in the above expressions is calculated through variations of the Minkowski distance:

$$\|x - y\|_p = \left(\sum_{i=1}^{m} |\dot{x}_i - y_p|^p\right)^{1/p}$$

Where x and y are any two vectors of equal dimension that share the same feature space *F*.

Special cases include the Manhattan distance (for p = 1), the Euclidean distance (for p = 2), the Chebyshev distance (for p = $\infty$), and the Hamming distance (for p = 0). This last equation is relevant for the present invention and is formally defined as:

$$\|x - y\|_0 = \sum_{i=1}^{m} ITE(x_i = y_i, 0, 1)$$

In which *ITE(t,a,b)* calculates as, if the condition *t* holds true, the result is *a*, else the result is *b*. This means that the distance between *x* and *y* is the number of features that have different values between the vectors.

For example, if all features of both vectors are in the binary domain, i.e. can only be 0 or 1, and both vectors have 4 dimensions, the vectors *x* = (0,0,1,1) and *y* = (0,1,1,0) have a Hamming distance of 2.

**State of the art**

Document EP3800587A1 refers to a method and machine learning system suitable for detecting adversarial examples. This method includes two different models. One of the models is trained with features that are considered robust and the other model with features considered non-robust. Upon completion of the training of both models, examples are classified using both models and should both models classify the same point with a different label then an adversarial example was detected.

Document US2022382880A1 discloses a system and method for adversarial vulnerability testing of machine learning models. This disclosure focuses on the determination of adversarial examples on white-box models. White-box models are characterized by their results being interpretable by a human observer, as opposed to black-box models where the results are not interpretable. An example of white-box models are decision tree models. This system generates a new machine learning model that derives from the first model by the use of sigmoidal functions. This system, unlike the present invention, does not ensure that an adversarial example existing in the original model will also be present on the derived model. This system uses gradients for noise introduction on the input features.

Document EP4296910A1 refers to a device and method for determining adversarial perturbations of a machine learning system. The described method introduces disturbances in the input vectors and calculates a non-defined error function. This error function determines if the deviation from the desired and the obtained outputs is large. The disturbance introduced is obtained by a probabilistic distribution. In the disclosure, only the identification of the largest error produced by a disturbance in the input features is considered to be an adversarial example, whereas in the present invention any variation that does not have the same classification as the original input vector is considered an adversarial example.

The following documents refer to the usage of adversarial examples, however all the presented solutions are based on model training, which the current invention does not:

Document CN111683108A presents a method for the detection of behavioral changes in network traffic, namely, to try to detect intrusion attempts. The starting point is the assumption that the models currently trained with a dataset of past examples are not capable of accommodating changes that exist either in the network topology itself or in the way communications change over time.

To overcome this problem, they propose carrying out the training of a first network model based on a source domain to obtain a trained first network model that comprises a source domain feature extractor and a classifier; Based on that model, the next step is training the source domain feature extractor and the discriminator pair to obtain a target domain feature extractor. The result is a network flow anomaly detection model according to the target domain feature extractor and the classifier.

Document CN117493886A concerns the unreliability of fault detection models for transformers used in energy systems and presents a training method and device for a text-based transformer fault intelligent identification model. The method comprises inputting a multi-label transformer fault text into a text semantic model based on a coding structure and obtaining a transformer fault text semantic coding vector and from thar vector obtain a transformer fault category result. During training, a multi-label and label imbalance adaptive loss function MSLoss is utilized to optimize the model effect, so that the model performance and robustness are improved, and high-accuracy transformer fault intelligent identification is realized.

US2021319258A1 claims a method to solve the problems that unbalanced data can have on the performance of a given model, either by too few/too many negative examples versus positive examples (this for a binary classification). The method includes in sequence a first training model to obtain a feature extractor, construct a generative adversarial network, train that network to obtain a feature generator, construct a classification task module and finally train the classification task model with the original dataset.

## Brief description of the drawings

These and other features can be easily understood in the attached drawings, which should be considered mere examples and in no way restrict the scope of the invention.

Figure 1 is a schematic overview of the detection system and the workflow of the method claimed in the current invention.

Figure 2 represents the two phases of the method of the invention.

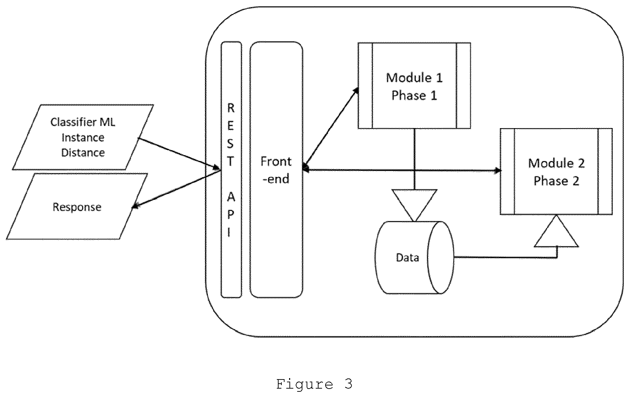

Figure 3 presents the Technical Architecture of the System.

## Detailed description of the invention

By "small distance" is meant a Hamming distance value between two vectors that is considered small by a person skilled in the art, proportionally to the total number of features.

With reference to the figures, the present invention refers to a method and a system for detecting small distance adversarial examples from input vectors. All input values have a set of features, wherein each feature belongs to a domain of discrete values.

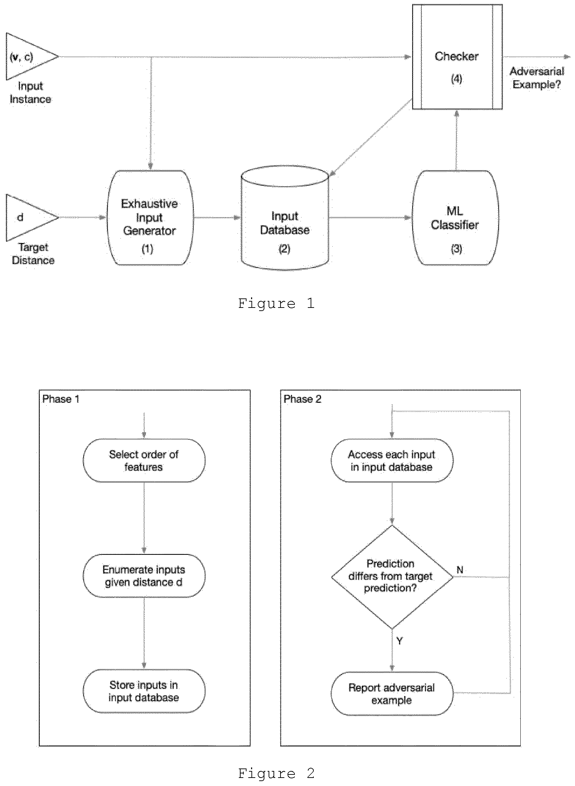

Figure 1 represents an overall schematic of the proposed method and system. Figure 2 represents the proposed method and system in two phases.

Before the first phase begins, an ML classifier (3) algorithm is stored in the system, in order to allow classifying any vector $v$ to obtain a predicted class $c$. An instance is a pair $(v,c)$ of the input vector $v$ with the ML classifier (3) predicted class $c$.

In the first phase, a pair $(v,c)$ is given to an Exhaustive Input Generator (1) alongside a small maximum Hamming distance $d$. The Exhaustive Input Generator (1) calculates a set of at least one derived vector $\{v'\}$ whose Hamming distance from the vector $v$ is at most $d$. Each derived vector $\{v'\}$ is then stored in a database (2).

In the second phase, the derived vectors are classified by the ML classifier (3) algorithm. Each derived vector $v'$ and its corresponding predicted label $c'$ are paired to create a $(v', c')$ pair. This pair is created for all derived vectors. These pairs, as well as the original $(v,c)$ pair, are passed through a Checker (4) which compares the original predicted label c with the predicted labels $c'$ of the derived vectors. Any time a predicted label $c'$ is not equal to the original predicted label $c$, the corresponding derived vector $v'$ paired with $c'$ is considered an adversarial example. Every time an adversarial example is found, the system will store this hit. The system will determine if the machine learning model is robust based on the identification of adversarial examples.

For each value of $d$ passed to the Exhaustive Input Generator (1), the number of generated derived vectors is proportional to the number of features of the original vector $v$. More specifically, the number of derived vectors raises in a polynomial proportion to the number of features of the original vector $v$, as well as in relation to the size the feature space $F$ of $v$. As a result, the method runs in polynomial-time in relation to the sizes of $v$ and $d$, as long as the ML classifier (3) also runs in polynomial-time.

## Generation of derived vectors

The following is a possible embodiment of the generation of the derived vectors, given an example value of the small maximum Hamming distance $d$, for a pair $(v,c)$ where the vector $v$ has size $m$ ($\#v = m$):

(a) Consider an example distance $d \geq 1$;

(b) For each integer k <= d, starting at k = 1;

(c) Consider the set of features determined by all the combinations of k features in m: $C_k^m$.

This means for k = 1, the result is the set of all the features, isolated, 1 by 1, for k = 2 the result is the set of all the different pairs of features, for k = 3 the result is the set of all different trios of features, and so on;

(d) Start with the first element of the set, and iterate until the end of the set;

(e) Change the first feature of the element of the set into other possible value from the domain and store the result in the database (2);

(f) Pick next feature of the set-in order, change it to another possible value in the same domain and store the result in the database (2);

(g) Repeat the process until changing all the features over all different combinations in their respective domains are changed, until all features have been exhausted;

(h) Go to the next element of the set and repeat steps (e), (f) and (g) for all features in the set;

(i) Repeat (h) until the end of the set defined in (c).

In another embodiment, the features selected in (c) are the features of the original vector **v** that were selected from heuristics that are commonly known. In this embodiment, the features selected are the ones given a proportionally larger weight by the ML classifier (3).

In another embodiment, the features of the original vector **v** are ordered by the proportion of the weight in regard to the ML classifier (3).

In an embodiment of the present invention, the calculated derived vectors can be repeated. In another embodiment, the calculation of the derived vectors avoids repetition, avoiding the calculation of any two derived vectors that are equal. In another embodiment, the database (2) can be a hash table that stores unique vectors and discards repeated ones.

An example of the above embodiments is explained below which does not consider derived vectors that are repeated:

1. For a vector **V** with 4 features, all features belong to the domain of binary numbers, i.e. all features are either 0 or 1;

2. The corresponding original label **C** can also only be 0 or 1;

3. The vector **V** is defined as **V** = **(0,1,0,1)** and **C** is 0. The vector-label pair will therefore be (V, C) **= ((0,1,0,1),0);**

4. The features of vector **V** are optionally ordered according to a given heuristic;

5. Given a maximum Hamming distance **D** of 2;

6. All possible derived vectors are calculated:

**(1,1,0,1), (0,0,0,1), (0,1,1,0), (0,1,0,0), (1,0,0,1), (1,1,1,1), (1,1,0,0), (0,0,1,1), (0, 0, 0, 0), (0, 1, 1, 1) ;**

7. In case the features of the original vector were ordered, the derived vectors will have to be reordered back into the original sequence.

In other embodiments, the features of the original vector v do not all belong to the same domain. In other embodiments, the domain of features can be different from the domain of binary numbers. Examples of other domains include but are not limited to the domain of octal numbers (0-7), the domain of decimal numbers (0-9), the domain of hexadecimal numbers (0-15), the domain of the Latin alphabet (a-z and/or A-Z), the domain of numbers from 0 to 255, among others.

In another embodiment, the ordering of derived vectors can be guided by heuristics that are commonly known and used in the state of the art.

In an embodiment of the present invention, all derived vectors are calculated for an original vector-label **(v,c)** pair and then stored in the database (2). In another embodiment of the present invention, each derived vector can be stored as soon as it is calculated.

In an embodiment of the present invention, all derived vectors can be classified using the ML classifier (3) before being compared in the Matcher (4). In another embodiment, a derived vector **v'** can be classified and compared before the next derived vector is classified and compared.

In yet another embodiment of the present invention, a derived vector can be calculated, classified and matched before the proceeding to the next calculation.

In another embodiment, the calculation of derived vectors can stop as soon as an adversarial example is found.

In other embodiments of the present invention, the method can run synchronously or asynchronously for multiple vector-label **(v,c)** pairs. In more embodiments, the second phase of the method and system of the present invention can run synchronously or asynchronously for multiple derived vectors.

In another embodiment of the present invention, the original vector-label **(v,c)** pairs were sampled from the training/testing data used to train the ML classifier (3).

As will be clear to an expert in the field, the application of the principles described here is not limited to the presented embodiments. Possible changes that may occur in the present invention, defined in number, remain within the scope of the present invention.

Example use cases

It has already been mentioned that in certain situations, it is difficult to classify the color of a traffic light. This can be applied to autonomous vehicles, whether cars or trains, or even to sidewalk indications for pedestrians. Assessing the robustness of the detection system is fundamental to avoiding situations that jeopardize the safety of people and property.

In a medical context, the risk of an AI medical assessment classification system is too high not to assess the robustness of the model in each situation. For example, faced with a classification of lymphoma, if a small variation of 5 per cent in one of the biomarkers leads to a different classification (e.g. infection), the diagnosis should be re-evaluated. In addition to the potential lack of accuracy in the model, the margin of error of the biomarkers may be in a range of 20 to 50 per cent and some models don't take this into account. A complementary assessment will be necessary to corroborate or refute the diagnosis.

In the financial area, financing decisions are assessed on the basis of a certain set of indicators. Sometimes, very small changes in one or some of the factors can lead to different decisions. For instance, in a loan of 10 million euros, if a difference of 1000€ in the company's results in the previous year leads to a different result, shouldn't the decision be re-evaluated? Robustness evaluation of a decision model should be an essential tool for any bank's risk department.

**References**

[1] C. Brix, M. N. Müller, S. Bak, T. T. Johnson, and C. Liu. First three years of the international verification of neural networks competition (VNN-COMP). Int. J. Softw. Tools Technol. Transf., 25(3):329-339, 2023.

**Claims**

1. A method implemented in a computer for determining the robustness of a machine learning model, the method comprising the steps of:

   (a) From an original vector-label pair **(v,c),** generating a set of at least one derived vector **{v'}** from the original vector **v**, with **v** and each **v'** being separated by a distance of at most **d;**
   (b) Running a machine learning classifier (3) on each derived vector to obtain a class **c';**
   (c) Comparing **c'** with the class c of the pair **(v,c)** to identify **v'** as being an adversarial example;
   (d) Determining if the machine learning model is robust based on the adversarial examples identified.

2. A method for determining the robustness of a machine learning model according to claim 1, wherein the distance **d** is a Hamming distance.

3. A method for determining the robustness of a machine learning model according to any of the previous claims, wherein the derived vectors are stored in a database (2) after being generated.

4. A method for determining the robustness of a machine learning model according to the previous claim, wherein the database (2) stores unique vectors.

5. A method for determining the robustness of a machine learning model according to any of the previous claims, wherein step (a) further employs heuristics to rank the features such that the features of interest are changed first.

6. A method for determining the robustness of a machine learning model according to any of the previous claims, wherein the features of the original vector **v** and of the derived vector **v'** are discrete.

7. A method for determining the robustness of a machine learning model according to any of the previous claims, wherein the derived vectors are calculated using an Exhaustive Input Generator (1).

8. A method for determining the robustness of a machine learning model according to any of the previous claims, wherein the calculated derived vectors are unique.

9. A method for determining the robustness of a machine learning model according to any of the previous claims, wherein the method runs synchronously.

10. A method for determining the robustness of a machine learning model according to any of the claims 1 to 8, wherein the method runs asynchronously.

Figure 1

Figure 2

Figure 3

**Europäisches Patentamt**
**European Patent Office**
**Office européen des brevets**

# EUROPEAN SEARCH REPORT

**Application Number**

EP 25 17 5160

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NICHOLAS CARLINI ET AL: "Towards Evaluating the Robustness of Neural Networks", ARXIV.ORG, CORNELL UNIVERSITY LIBRARY, 201 OLIN LIBRARY CORNELL UNIVERSITY ITHACA, NY 14853, 16 August 2016 (2016-08-16), XP080720248, * the whole document * | 1-10 | INV. G06N3/094 G06N20/00 |
| A | APOSTOLOS MODAS ET AL: "SparseFool: a few pixels make a big difference", ARXIV.ORG, CORNELL UNIVERSITY LIBRARY, 201 OLIN LIBRARY CORNELL UNIVERSITY ITHACA, NY 14853, 6 November 2018 (2018-11-06), XP081046627, * Sections 1-3 * | 1-10 | |
| A | WAN LI ET AL: "Efficient Error-correcting Output Codes for Adversarial Learning Robustness", ICC 2022 - IEEE INTERNATIONAL CONFERENCE ON COMMUNICATIONS, IEEE, 16 May 2022 (2022-05-16), pages 2345-2350, XP034168038, DOI: 10.1109/ICC45855.2022.9839178 [retrieved on 2022-08-11] * Sections I-III * | 1-10 | TECHNICAL FIELDS SEARCHED (IPC) G06N |
| A | MOOSAVI-DEZFOOLI SEYED-MOHSEN ET AL: "DeepFool: A Simple and Accurate Method to Fool Deep Neural Networks", 2016 IEEE CONFERENCE ON COMPUTER VISION AND PATTERN RECOGNITION (CVPR), IEEE, 27 June 2016 (2016-06-27), pages 2574-2582, XP033021438, DOI: 10.1109/CVPR.2016.282 [retrieved on 2016-12-09] * Sections 1-3 * | 1-10 | |

The present search report has been drawn up for all claims

| Place of search | Date of completion of the search | Examiner |
|---|---|---|
| The Hague | 31 July 2025 | Efthymiadis, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3800587 A1
- US 2022382880 A1
- EP 4296910 A1
- CN 111683108 A
- CN 117493886 A
- US 2021319258 A1

**Non-patent literature cited in the description**

- **C. BRIX** ; **M. N. MÜLLER** ; **S. BAK** ; **T. T. JOHNSON** ; **C. LIU**. First three years of the international verification of neural networks competition (VNN-COMP). *Int. J. Softw. Tools Technol. Transf.*, 2023, vol. 25 (3), 329-339